# EUROPEAN PATENT APPLICATION

(11) **EP 4 682 090 A1**
(43) Date of publication of application: **21.01.2026**
(21) Application number: 24869414.3
(22) Date of filing: 19.12.2024
(51) Int. Cl.: B65G 1/137, B65B 35/30, B65B 65/00, B65B 5/10

(54) **WORKSTATION AND PICKING SYSTEM**

(30) Priority: 31.05.2024 CN 202410705234
(71) Applicant: Beijing Jingdong Qianshi Technology Co., Ltd., Beijing 100176 (CN)
(72) Inventor: LIANG, Zhe, Beijing 100176 (CN); WANG, Guopeng, Beijing 100176 (CN); ZHU, Sen, Beijing 100176 (CN); SHANG, Chunpeng, Beijing 100176 (CN); ZHANG, Guoliang, Beijing 100176 (CN)
(74) Representative: Page White Farrer
(86) International application number: PCT/CN2024/140711
(87) International publication number: WO 2025/246307

(57) **Abstract**

The present application discloses a workstation and an article retrieval system. The workstation comprises a packing assembly, a buffer assembly and a merge assembly. The buffer assembly includes a buffer rack and a plurality of buffer hoppers, wherein the plurality of buffer hoppers are installed on the buffer rack and configured to receive an article conveyed by the article retrieval mechanism. The number of the buffer hoppers is greater than or equal to that of the sorting hoppers of the article retrieval mechanism. The merge assembly is movably connected to the buffer rack through a movable assembly, and configured to receive an article in at least one of the plurality of buffer hoppers, and convey at least one article to the packing assembly.

## Description

### CROSS-REFERENCE TO RELATED APPLICATIONS

The present disclosure claims priority to China Patent Application No. 202410705234.X filed on May 31, 2024, the title of which is "WORKSTATION AND ARTICLE RETRIEVAL SYSTEM", and which is incorporated by reference herein in its entirety.

### TECHNICAL FIELD

The present application relates to the field of warehousing logistics technology, in particular to a workstation and an article retrieval system including the workstation.

### BACKGROUND

In order to improve the space utilization, articles are usually stored on a shelf. When the articles are retrieved, the system controls an article retrieval mechanism to retrieve the target article on a shelf and transfer it to a workstation for package according to the order information. However, with the rapid development of warehousing logistics technology, the order volume is increasing, and the efficiency of transferring the target article to the workstation by the article retrieval mechanism in the related art still cannot meet the increasing order volume.

### SUMMARY

According to a first aspect, the workstation according to the embodiment of the present application includes a packing assembly, a buffer assembly and a merge assembly; the buffer assembly includes a buffer rack and a plurality of buffer hoppers, wherein the plurality of buffer hoppers are installed on the buffer rack and configured to receive an article conveyed by the article retrieval mechanism; wherein the number of the buffer hoppers is greater than or equal to that of the sorting hoppers of the article retrieval mechanism; the merge assembly is movably connected to the buffer rack through a movable assembly, and configured to receive an article in at least one of the plurality of buffer hoppers and convey at least one article to the packing assembly.

According to a second aspect, the article retrieval system according to the embodiment of the present application includes the above-described workstation.

### BRIEF DESCRIPTION OF THE DRAWINGS

Fig. 1 is a schematic perspective view of an article retrieval system according to the embodiment of the present application from one perspective.
Fig. 2 is a schematic perspective view of an article retrieval system according to the embodiment of the present application from another perspective.
Fig. 3 is a schematic perspective view of an article retrieval mechanism according to the embodiment of the present application.
Fig. 4 is a schematic perspective view of a sorting assembly according to the embodiment of the present application.
Fig. 5 is a schematic view showing that a trigger of the sorting assembly is located between an abutment member and a pressing member of a workstation.
Fig. 6 is a schematic perspective view of a workstation according to the embodiment of the present application.
Fig. 7 is a schematic perspective view of a buffer assembly according to the embodiment of the present application.
Fig. 8 is a schematic perspective view of a buffer hopper according to the embodiment of the present application.
Fig. 9 is a schematic perspective view of a merge hopper according to the embodiment of the present application.
Fig. 10 is a schematic perspective view of applying a retriever to a shelf according to the embodiment of the present application.
Fig. 11 is a schematic perspective view of the retriever according to the embodiment of the present application.
Fig. 12 is a partial schematic view of a retrieval assembly according to the embodiment of the present application.
Fig. 13 is a partial schematic view of a retrieval assembly according to the embodiment of the present application from another perspective.
Fig. 14 is a schematic perspective view of a guide part according to the embodiment of the present application.
Fig. 15 is a schematic perspective view in which the guide part in Fig. 13 is omitted.

### DETAILED DESCRIPTION

The exemplary embodiments will now be described more comprehensively with reference to the accompanying drawings. However, the exemplary embodiments can be implemented in multiple forms and should not be construed as limited to the embodiments set forth here. Rather, these embodiments are provided so that the present application will be thorough and complete, and will comprehensively convey the concepts of the exemplary embodiments to those skilled in the art. The same reference numerals in the accompanying drawings indicate the same or similar structures, and thus their detailed descriptions will be omitted.

It can be understood that, the terms "including" and "having" as well as any variations thereof in the embodiments of the present application are intended to cover non-exclusive inclusion. For example, a process, method, system, product or device that contains a series of steps or units is not limited to the steps or units as listed, but alternatively further includes steps or units that are not listed, or alternatively further includes other steps or components inherent to these processes, methods, products or devices.

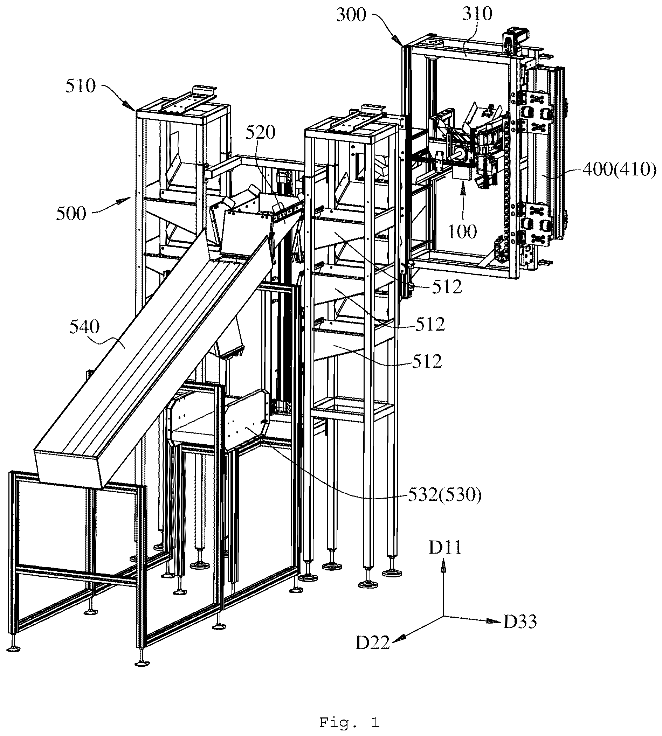

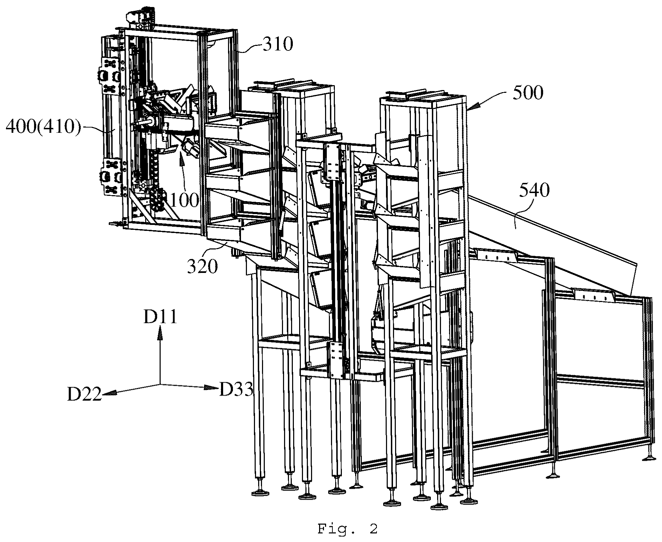

As shown in Figs. 1 and 2, the article retrieval system according to the embodiment of the present application includes an article retrieval mechanism 300, a traveling mechanism 400 and a workstation 500. The article retrieval mechanism 300 is liftably connected to the traveling mechanism 400 along a first direction D11.Among these, In the embodiment of the present application, the first direction D11 is a vertical direction. The workstation 500 is arranged on the ground for packing the sorted article. The traveling mechanism 400 is movably arranged on the ground, and moves between a position proximate to the workstation 500 and a position away from the workstation 500 along a third direction D33.

When an article is retrieved, the traveling mechanism 400 drives the article retrieval mechanism 300 to move to the vicinity of the shelf along the third direction D33, and the article retrieval mechanism 300 moves up and down along the first direction D11 to ensure that the article retrieval mechanism 300 is aligned with an article to be retrieved. After the article retrieval mechanism 300 retrieves the article from the shelf and places it in the article retrieval mechanism 300, the traveling mechanism 400 drives the article retrieval mechanism 300 to move to the vicinity of the workstation 500 again, so that the article retrieval mechanism 300 conveys an article to the workstation 500.

Among these, the traveling mechanism 400 includes an upright post 410. It is to be noted that, in order to simplify the views, Figs. 1 and 2 only show part of the upright post 410 of the traveling mechanism 400, while other structures are omitted. For other structures of the traveling mechanism 400, reference can be made to mature article in the prior art, which will not be described in detail in the present application.

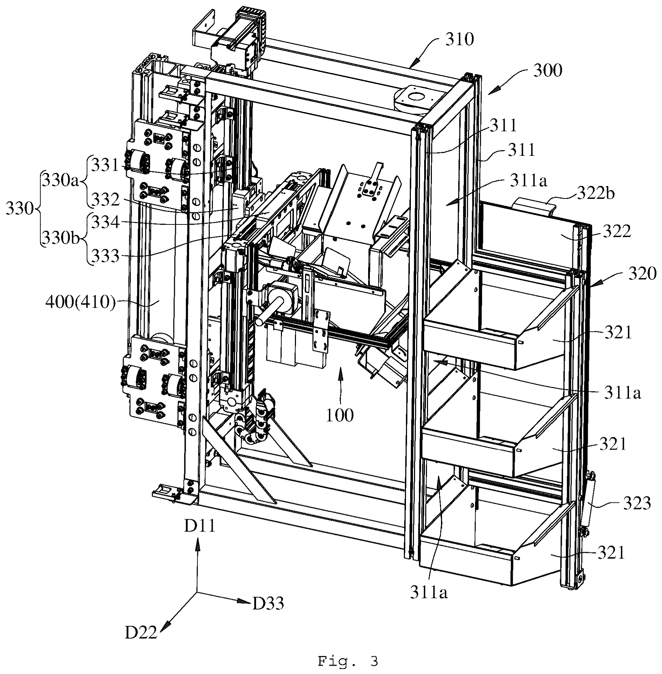

As shown in Fig. 3, the article retrieval mechanism 300 according to the embodiment of the present application includes a liftable frame 310, a retriever 100 and a sorting assembly 320. The liftable frame 310 is liftably connected to the upright post 410 of the traveling mechanism 400 along a first direction D11. Among these, the axial direction of the upright post 410 is parallel to the first direction D11. The retriever 100 is movably connected to the liftable frame 310 through the mobile assembly 330; the sorting assembly 320 is connected to the liftable frame 310 and includes a plurality of sorting hoppers 321; wherein the retriever 100 is configured to retrieve an article located on a shelf and convey an article to any one of the plurality of sorting hoppers 321.

When the article retrieval mechanism 300 according to the embodiment of the present application retrieves an article, after a first target article is picked up, the retriever 100 transfers the article to one of the plurality of sorting hoppers 321, and then the retriever 100 continues to pick up a second target article. If the second target article is at a very close distance from the first target article, the second target article can be picked up by only driving the retriever 100 to move relative to the liftable frame 310 without driving the traveling mechanism 400 to move and/or driving the liftable frame to move up and down. Afterwards, the second target article is then transferred to one of the remaining empty sorting hoppers 321. When all the sorting hoppers 321 are loaded with an article, the traveling mechanism 400 is driven back to transfer all the article in the article retrieval mechanism 300 to the workstation 500.

Thus it can be seen that, in the article retrieval mechanism 300 according to the embodiment of the present application, the retriever 100 is movably connected to the liftable frame 310 through the mobile assembly 330, and the sorting assembly 320 includes a plurality of sorting hoppers 321 for accommodating an article. By way of a slight movement of the retriever 100 relative to the liftable frame 310, the retriever 100 can retrieve a plurality of articles and load them into the plurality of sorting hoppers 321 respectively, which significantly improves the retrieval efficiency of the article retrieval mechanism 300.

As shown in Fig. 3, the mobile assembly 330 includes a first mobile unit 330a and a second mobile unit 330b. The first mobile unit 330a is configured to drive the retriever 100 to move along the first direction D11. The second mobile unit 330b is configured to drive the retriever 100 to move along the second direction D22. Among these, the first direction D11, the second direction D22 and the third direction D33 are perpendicular to each other. The plurality of sorting hoppers 321 are arranged side by side along the first direction D11 or the second direction D22.

As an example, the first mobile unit 330a and the second mobile unit 330b are linear slide tables. For example, the first mobile unit 330a includes a first slide rail 331 and a first slide block 332. The first slide rail 331 is connected to the liftable frame 310, and the length direction of the first slide rail 331 is parallel to the first direction D11. The first slide block 332 is movably connected to the first slide rail 331 along the first direction D11.

The second mobile unit 330b includes a second slide rail 333 and a second slide block 334. The second slide rail 333 is connected to the first slide block 332, and the length direction of the second slide rail 333 is parallel to the second direction D22. The second slide block 334 is movably connected to the second slide rail 333 along the second direction D22. The retriever 100 is connected to the second slide block 334.

Of course, in other embodiments, the first mobile unit 330a and the second mobile unit 330b can also be other linear drive mechanisms, which will not be described in detail here.

In addition, the movement path of the retriever 100 relative to the liftable frame 310 through the mobile assembly 330 can not be straight, for example, it can also be arc, as long as it is satisfied that different target article can be picked up by moving of the retriever 100 relative to the liftable frame 310.

As shown in Fig. 3, the liftable frame 310 includes two first longitudinal beams 311 arranged at intervals along the second direction D22, and the plurality of sorting hoppers 321 are connected to the two first longitudinal beams 311 and arranged side by side along the first direction D11; wherein the area between the two first longitudinal beams 311 is partitioned into a plurality of first windows 311a by the plurality of sorting hoppers 321, and the plurality of first windows 311a correspond to the plurality of sorting hoppers 321 respectively.

For example, after the retriever 100 picks up the first target article, the retriever 100 can align with one of the first windows 311a by moving the first mobile unit 330a in collaboration with the second mobile unit 330b, so that the first target article in the retriever 100 can pass through the first windows 311a to slide off into one of the sorting hoppers 321.

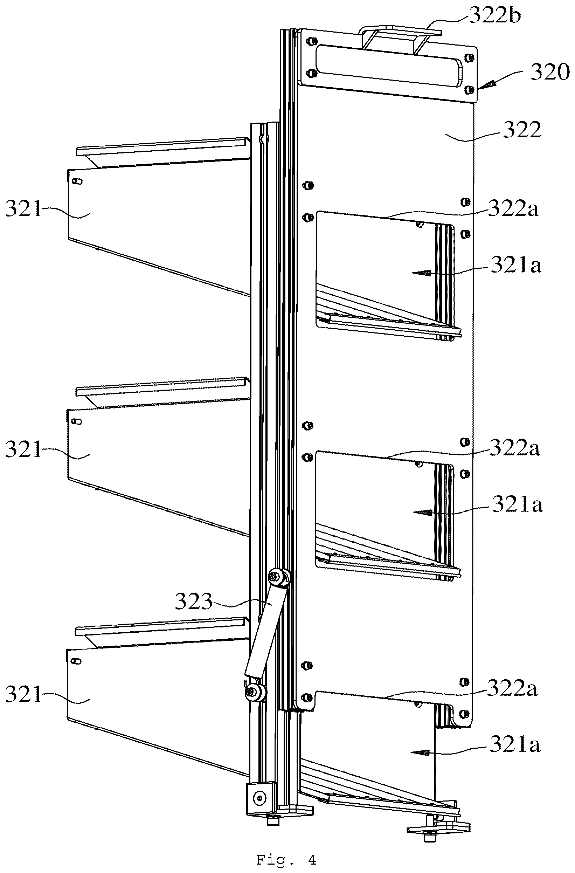

As shown in Fig. 4, each sorting hopper 321 has a first outlet 321a for an article to slide out; the sorting assembly 320 further includes a shield 322 movably connected to the liftable frame 310 between a first position and a second position, and the shield 322 has a plurality of second windows 322a; when the shield 322 is located at the first position, the shield 322 simultaneously encloses a plurality of first outlets 321a; and when the shield 322 is located at the second position, the plurality of second windows 322a communicate with the plurality of first outlets 321a respectively.

During the retrieval process of the retriever 100, the shield 322 is located at the first position, so that the shield 322 encloses a plurality of first outlets 321a of the plurality of sorting hoppers 321, so as to prevent an article from slipping out of the first outlet 321a of the sorting hopper 321. After the retriever 100 finishes the retrieval, and the traveling mechanism 400 drives the retriever 300 to return to the workstation 500, the shield 322 is located at the second position, and the article in each sorting hopper 321 automatically slides into to the workstation 500 through the second window 322a corresponding to the sorting hopper 321.

As an example, the shield 322 is movably connected to the liftable frame 310 along a lifting direction (a first direction D11) of the liftable frame 310. Since the first direction D11 is a vertical direction, the shield 322 can move from the second position to the first position by own gravity.

The sorting assembly 320 further includes an elastic member 323 connected to the liftable frame 310 and the shield 322 for providing elastic force to the shield 322 to move to the first position. By providing the elastic member 323, it can be ensured that the shield 322 remains at the first position during the retrieval process of the article retrieval mechanism 300, so as to prevent an article in the sorting assembly 320 from sliding off resulting from the shield 322 accidentally opening the first outlet 321a of the sorting hopper 321.

In one embodiment, the elastic member 323 can be a tension spring, but is not limited thereto.

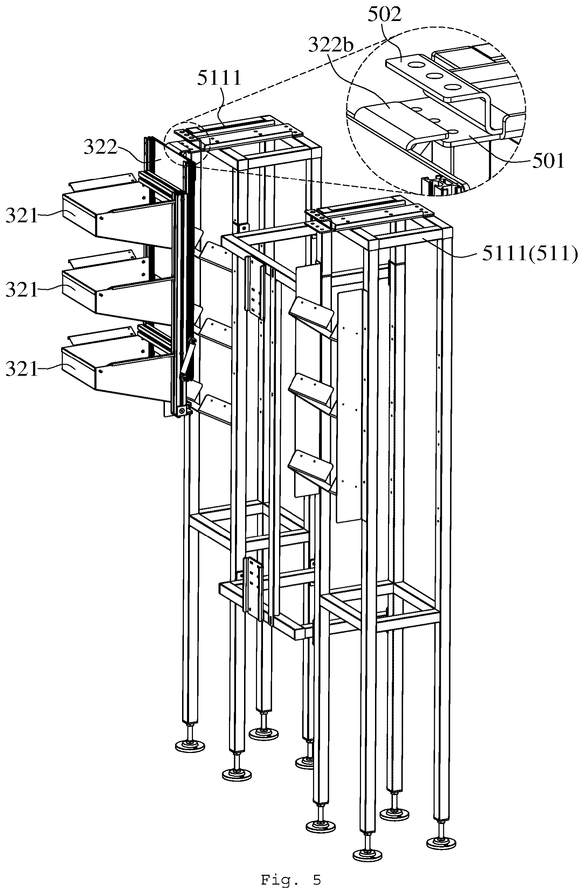

As shown in Fig. 5, the top of the shield 322 has a trigger 322b. The workstation 500 has an abutment member 501, and the respective orthographic projections of the abutment member 501 and the trigger 322b on a target plane have overlapping first projections. Among these, the target plane is perpendicular to the lifting direction (the first direction D11) of the liftable frame 310. When the liftable frame 310 descends, the abutment member 501 is configured to abut against the trigger 322b, so that the shield 322 moves from the first position to the second position.

In the embodiment of the present application, when the traveling mechanism 400 drives the article retrieval mechanism 300 to move to the vicinity of the workstation 500, at this time the trigger 322b is located above the abutment member 501. The respective orthographic projections of the abutment member 501 and the trigger 322b have overlapping first projections on a target plane. When the liftable frame 310 drives the article retrieval mechanism 300 to descend, the abutment member 501 abuts against the trigger 322b, so that the shield 322 moves from the first position to the second position. Thus it can be seen that, by providing the abutment member 501 and the trigger 322b, when the liftable frame 310 descends, the shield 322 can automatically open the first outlet 321a of the sorting hopper 321, so that an article in the sorting hopper 321 can slides off into to the workstation 500.

As shown in Fig. 5, the workstation 500 also has a pressing member 502. The respective orthogonal projections of the pressing member 502 and the trigger 322b on a target plane have overlapping second projections. When the liftable frame 310 ascends, the pressing member 502 is configured to stop the trigger 322b.

When all the article in the sorting hopper 321 slide off into the workstation 500, the traveling mechanism 400 can drive the article retrieval mechanism 300 to perform a next retrieval action. In normal circumstances, after the trigger 322b leaves the abutment member 501, the shield 322 can move from the second position to the first position under the effect of own gravity of the shield 322 and/or under the effect of elastic force of the elastic member 323. However, under abnormal circumstances, for example, when the shield 322 does not slide smoothly relative to the liftable frame 310, the shield 322 is likely to be stuck so that it is impossible to move to the first position under the effect of gravity and/or elastic force, which results in that the first outlet 321a of the sorting hopper 321 is still in an open state. At this time, if a retrieval action is performed, the article can slide out from the first outlet 321a of the sorting hopper 321.

In the embodiment of the present application, by providing the pressing member 502, it is possible to avoid that the shield 322 cannot be reset to the first position due to abnormalities, so as to ensure that a next retrieval action is normally performed.

As shown in Fig. 5, the pressing member 502 and the abutment member 501 are oppositely arranged along the first direction D11, and the respective orthogonal projections of the pressing member 502 and the abutment member 501 on a target plane have overlapping third projections.

It is to be noted that, along the first direction D11, the trigger 322b is at least partially located between the pressing member 502 and the abutment member 501. In order to ensure the normal lifting of the liftable frame 310 and avoid the interference of the pressing member 502, the movement of the traveling mechanism 400 and the liftable frame 310 is performed in stages:

During the process of returning to the workstation 500, the traveling mechanism 400 drives the article retrieval mechanism 300 to move to the third position. When the article retrieval mechanism 300 is located at the third position, the trigger 322b is located outside the space surrounded by the abutment member 501 and the pressing member 502, that is, the orthogonal projections of the trigger 322b and the abutment member 501 on a target plane are not present with an overlapping projection. Afterwards, the traveling mechanism 400 translates along the third direction D33, so that the article retrieval mechanism 300 moves to the fourth position. When the article retrieval mechanism 300 is located at the fourth position, the trigger 322b is at least partially located between the abutment member 501 and the pressing member 502. Finally, the liftable frame 310 drives the article retrieval mechanism 300 to descend and move to the fifth position. During the movement process of the article retrieval mechanism 300 from the fourth position to the fifth position, the abutment member 501 abuts against the trigger 322b to move the shield 322 from the first position to the second position.

During the process of leaving the workstation 500 to perform the retrieval, the article retrieval mechanism 300 moves from the fifth position to the fourth position. If the shield 322 is not stuck due to abnormalities, the shield 322 can automatically be reset to the first position, and then the traveling mechanism 400 translates along the third direction D33 to move the trigger 322b out of the space surrounded by the abutment member 501 and the pressing member 502. If the shield 322 is stuck at a certain position of the liftable frame 310 due to abnormalities, during the movement process of the article retrieval mechanism 300 from the fifth position to the fourth position, the pressing member 502 can press the trigger 322b, so that the shield 322 is reset to the first position under the effect of the abutment force, which avoids that the first outlet 321a of the sorting hopper 321 is still in an open state. Afterwards, the traveling mechanism 400 translates along the third direction D33 to move the trigger 322b out of the space surrounded by the abutment member 501 and the pressing member 502.

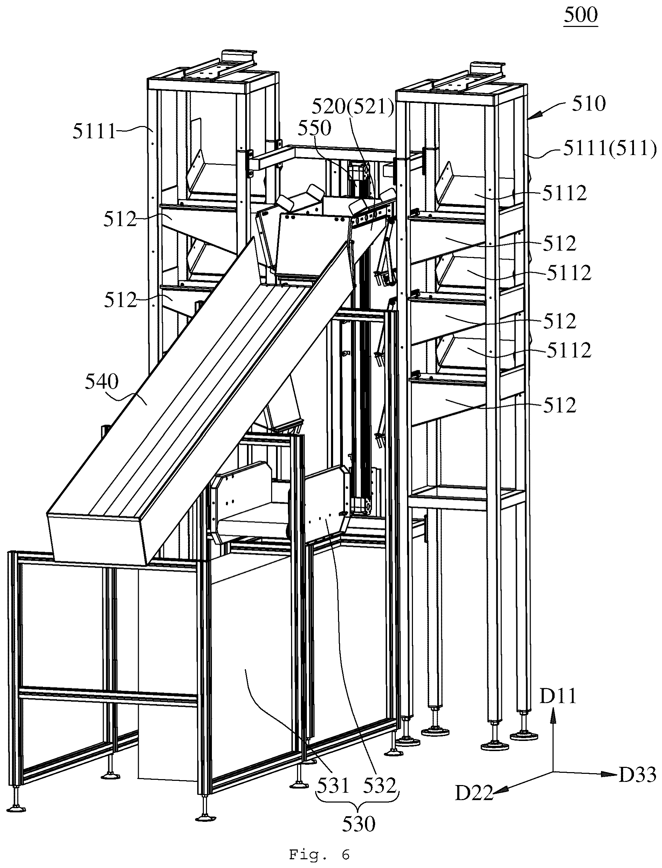

As shown in Fig. 6, the workstation 500 according to the embodiment of the present application includes a packing assembly 530, an abnormality processing assembly 540, a buffer assembly 510 and a merge assembly 520. The buffer assembly 510 includes a buffer rack 511 and a plurality of buffer hoppers 512, wherein the plurality of buffer hoppers 512 are installed on the buffer rack 511 for receiving an article conveyed by the article mechanism 300. The number of buffer hoppers 512 is greater than or equal to that of the sorting hoppers 321. The merge assembly 520 is movably connected to the buffer rack 511 through the movable assembly 550, and configured to receive an article in at least one buffer hopper 512 among the plurality of buffer hoppers 512, convey at least one article to the packing assembly 530, and convey an abnormal article to the abnormality processing assembly 540.

Among these, an abnormal article refers to an article falsely retrieved by the article retrieval mechanism 300, or one or several article corresponding to an order canceled by the client.

The abnormality processing assembly 540 is configured to process an abnormal article. For example, in one embodiment, the abnormality processing assembly 540 can be a chute, which can convey an abnormal article to a designated location.

Of course, in other embodiments, the abnormality processing assembly 540 can also be a device for collecting an abnormal article.

In the embodiment of the present application, after the article retrieval mechanism 300 retrieves an article from the shelf, the traveling mechanism 400 drives the article retrieval mechanism 300 to move to the vicinity of the workstation 500, and all the article in the plurality of sorting hoppers 321 of the article retrieval mechanism 300 are transferred to a plurality of buffer hoppers 512 of the buffer assembly 510. Then, according to whether an article is abnormal, the merge assembly 520 conveys the article to the packing assembly 530 or the abnormality processing assembly 540. At this time, since the article transfer in the sorting hopper 321 of the article retrieval mechanism 300 has been completed, the traveling mechanism 400 can drive the article retrieval mechanism 300 to return to the shelf to perform a next retrieval action, without waiting for the merge assembly 520 to complete the article transfer before returning to the shelf to perform a next retrieval action.

Thus it can be seen that, the workstation 500 according to the embodiment of the present application includes a buffer assembly 510 and a merge assembly 520. The buffer assembly 510 can be configured to temporarily store an article conveyed by the article retrieval mechanism 300, and the merge assembly 520 can convey an article conveyed by the buffer assembly 510 to the packing assembly 530 or the abnormality processing assembly 540. When the merge assembly 520 transfers an article, the article retrieval mechanism 300 can perform a next retrieval action without waiting in place, which can significantly improve the retrieval efficiency and effectively enhance the ability of processing orders by the workstation 500.

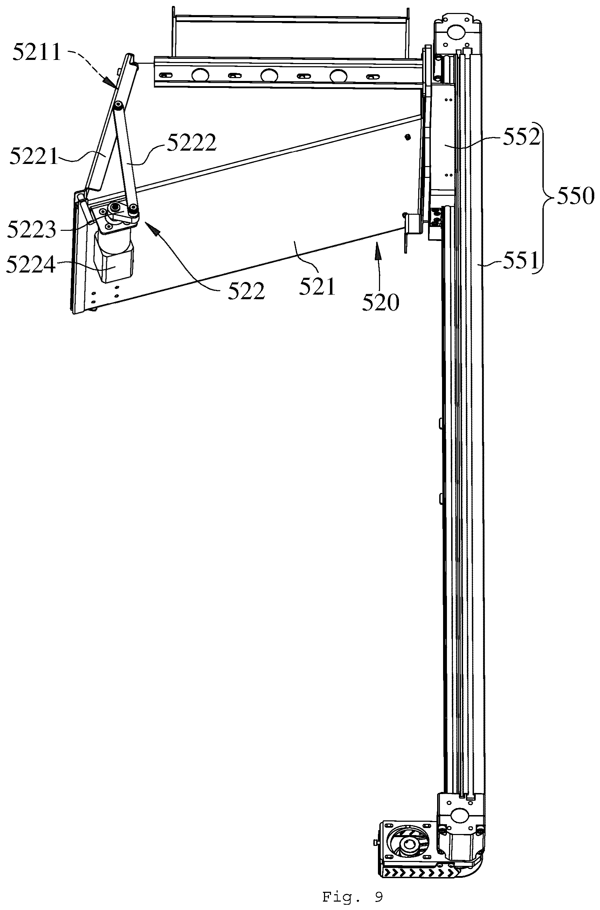

As shown in Figs. 6 and 9, as an example, the movable assembly 550 can be a linear slide table. For example, the movable assembly 550 includes a third slide rail 551 and a third slide block 552. The third slide rail 551 is connected to the buffer rack 511, and the length direction of the third slide rail 551 is parallel to the height direction (the first direction D11) of the buffer rack 511. The third slide block 552 is movably connected to the third slide rail 551, and the merge assembly 520 is connected to the third slide block 552.

Of course, in other embodiments, the movable assembly 550 can also be other linear drive mechanisms, which will not be described in detail here.

In addition, the movement path of the merge assembly 520 relative to the buffer rack 511 through the movable assembly 550 can not be straight, for example, it can also be arc, as long as it is satisfied that the target article in different buffer hoppers 512 can be picked up by moving the merge assembly 520 relative to the buffer rack 511.

As shown in Fig. 6, the buffer rack 511 includes two frames 5111 arranged at intervals along the length direction (the third direction D33) of the buffer rack 511, and each frame 5111 is connected with a plurality of buffer hoppers 512 arranged at intervals along the height direction (the first direction D11) of the buffer rack 511; the number of the buffer hopper 512 connected to the same frame 5111 is greater than or equal to that of the sorting hopper 321. Along the height direction (the first direction D11) of the buffer rack 511, the merge assembly 520 is movably located between the two frames 5111.

It is to be noted that, in order to simplify the views, only one of the two frames 5111 in Fig. 1 is provided with the article retrieval mechanism 300 correspondingly, while the other frame 5111 is not provided with the article retrieval mechanism 300 correspondingly. In fact, the two frames 5111 in the present application can be provided with the article retrieval mechanism 300 correspondingly. In other words, the two frames 5111 of the workstation 500 correspond to two sets of article retrieval mechanisms 300 and traveling mechanisms 400 respectively, and the article retrieval mechanism 300 is liftably connected to a corresponding traveling mechanism 400. Along the third direction D33, the two traveling mechanisms 400 can move along the direction close to or away from each other. The two traveling mechanisms 400 can drive the two article retrieval mechanisms 300 to pick up the article on two shelves at different positions respectively.

In the embodiment of the present application, the merge assembly 520 is provided with a frame 5111 on both sides along the third direction D33, and each frame 5111 is provided with a plurality of buffer hoppers 512. In this way, the merge assembly 520 can receive the article from the buffer hoppers 512 located on different frames 5111, and convey the article to the packing assembly 530 for package.

For example, two article corresponding to one order are located on different shelves respectively. At this time, two traveling mechanisms 400 are required to drive two article retrieval mechanisms 300 to retrieve two article respectively and transfer them to the buffer hoppers 512 on two frames 5111 respectively.

In the embodiment of the present application, each frame 5111 is provided with three buffer hoppers 512. For ease of description, one frame 5111 thereof is provided with three buffer hoppers 512 with the serial numbers 1, 2 and 3 respectively, and the other frame 5111 is provided with three buffer hoppers 512 with the serial numbers 4, 5 and 6 respectively. If two article corresponding to one order are conveyed to 1 and 6 by the two article retrieval mechanisms 300 respectively, the article in 1 and 6 can be received sequentially through the merge assembly 520, and the two article are simultaneously conveyed to the packing assembly 530 for package after merge.

As shown in Fig. 6, the packing assembly 530 includes a packager 531 and a buffer table 532. The packager 531 is configured to pack an article; and the buffer table 532 is configured to buffer an article conveyed by the merge assembly 520 and convey the article to the packager 531.

In the embodiment of the present application, the buffer table 532 can buffer an article to avoid that the packager 531 is damaged due to an excessive impulse when the article slides out of the merge assembly 520.

In one embodiment, the buffer table 532 can be a conveyor belt assembly, a conveyor roller assembly and the like, which is not particularly limited in the present application.

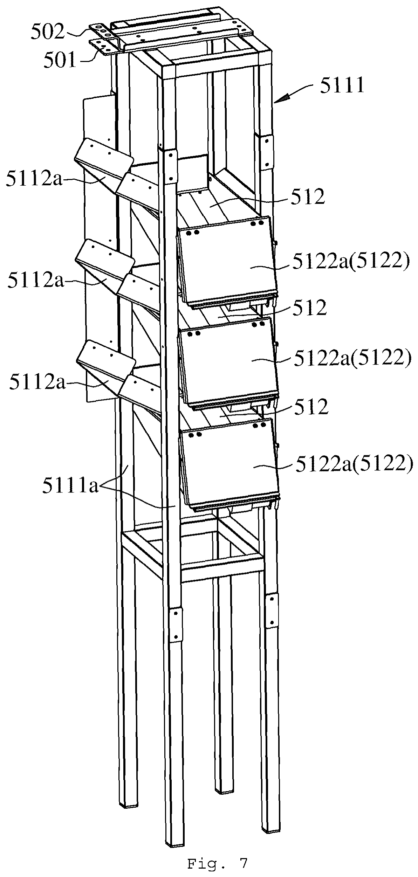

As shown in Fig. 7, each frame 5111 includes two second longitudinal beams 5111a arranged at intervals, and a plurality of guide parts 5112 arranged at intervals along the height direction (the first direction D11) of the buffer rack 511 are connected between the two second longitudinal beams 5111a. The plurality of guide parts 5112 correspond to a plurality of buffer hoppers 512 in the frame 5111 respectively, and each guide part 5112 has a guide slope 5112a for guiding an article to slide off from the article retrieval mechanism 300 into the buffer hopper 512. The plurality of sorting hoppers 321 of the article retrieval mechanism 300 can correspond to the plurality of guide parts 5112 provided in one frame 5111 respectively, so that the article slides off from the sorting hopper 321 into the buffer hopper 512 by means of the guide part 5112.

In one embodiment, the top of each frame 5111 is provided with an abutment member 501 and a pressing member 502.

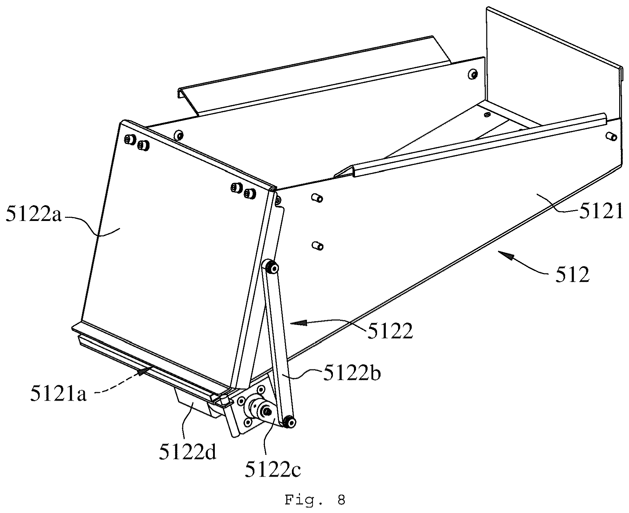

As shown in Fig. 8, the buffer hopper 512 includes a hopper body 5121 and a first cover assembly 5122. The hopper body 5121 is connected to the buffer rack 511 and has a second outlet 5121a; and the first cover assembly 5122 is connected to the hopper body 5121 for enclosing or opening the second outlet 5121a. When the first cover assembly 5122 is in a closed state, it can be used to stop an article in the hopper body 5121 from slipping out of the second outlet 5121a.

As an example, the first cover assembly 5122 includes a first cover plate 5122a, a first connecting rod 522b, a second connecting rod 512c and a third electric motor 5122d. The first cover plate 5122a is rotatably connected to the hopper body 5121 for opening or enclosing the second outlet 5121a; one end of the first connecting rod 522b is hinged to a side of the first cover plate 5122a; one end of the second connecting rod 5122c is hinged to the other end of the first connecting rod 5122b; the third electric motor 5122d is connected to the hopper body 5121, and the output shaft of the third electric motor 5122d is connected to the other end of the second connecting rod 5122c.

As shown in Fig. 9, the merge assembly 520 includes a merge hopper 521 and a second cover assembly 522. The merge hopper 521 is movably connected to the buffer rack 511 through the movable assembly 550 and has a third outlet 5211. The second cover assembly 522 is connected to the merge hopper 521 for enclosing or opening the third outlet 5211. When the second cover assembly 522 is in a closed state, the article in the merge hopper 521 can be prevented from slipping out of the third outlet 5211.

As an example, the second cover assembly 522 includes a second cover plate 5221, a third connecting rod 5222, a fourth connecting rod 5223 and a fourth electric motor 5224. The second cover plate 5221 is rotatably connected to the merge hopper 521 for opening or enclosing the third outlet 5211; one end of the third connecting rod 5222 is hinged to a side of the second cover plate 5221; one end of the fourth connecting rod 5223 is hinged to the other end of the third connecting rod 5222; the fourth electric motor 5224 is connected to the merge hopper 521, and an output shaft of the fourth electric motor 5224 is connected to the other end of the fourth connecting rod 5223.

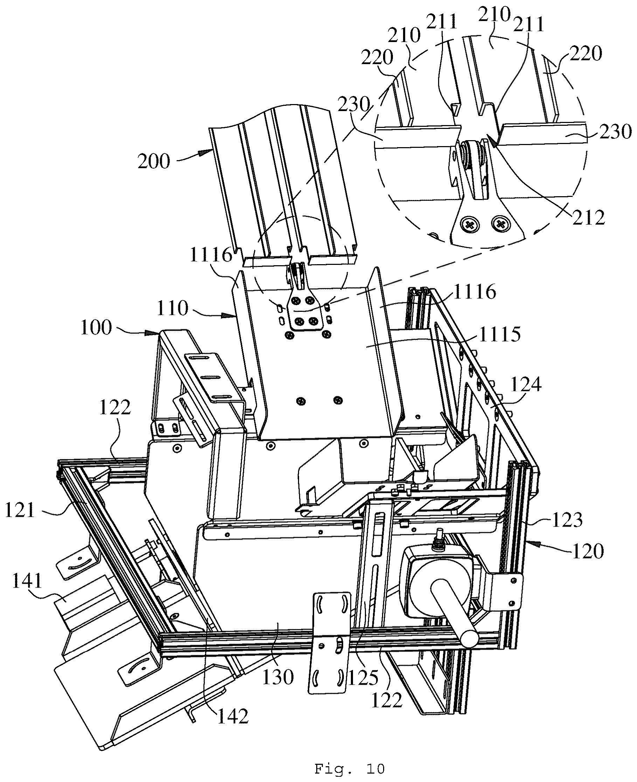

As shown in Fig. 10, the retriever 100 according to the embodiment of the present application can retrieve an article placed on the shelf 200 from the shelf 200. The retriever 100 according to the embodiment of the present application includes a machine rack 120, a retrieval hopper 130 and a retrieval assembly 110. The retrieval hopper 130 is installed in the machine rack 120, the retrieval assembly 110 is connected to the machine rack 120, and the retrieval assembly 110 is configured to guide an article to slide into the retrieval hopper 130.

Among these, the shelf 200 includes a plurality of shelves 210 arranged at intervals, wherein each shelf 210 is obliquely arranged, and the shelf 210 is configured to support an article. The extremity of each shelf 210 is provided with a baffle 230 for blocking an article from slipping off the shelf 210 due to own gravity. The extremity of each shelf 210 is also provided with a notch 211, and two adjacent notches 211 in adjacent shelves 210 form a recess 212. Each shelf 210 is also provided with a partition 220, and two adjacent partitions 220 in adjacent shelves 210 form a storage space for storing a plurality of article arranged side by side along an inclined direction of the shelf 210. Under the effect of gravity, two adjacent article abut against each other, and the article located at the lowermost among the plurality of article abuts against the baffle 230.

When the retriever 100 retrieves an article, the retrieval assembly 110 moves to the bottom of the shelf 210 and passes through the recess 212 from bottom to top, so that the retrieval assembly 110 can pick up the article located at the lowermost among a plurality of article, and cause the article to climb over the baffle 230 to slide off to the retrieval assembly 110, and then slide off into the retrieval hopper 130 through the retrieval assembly 110.

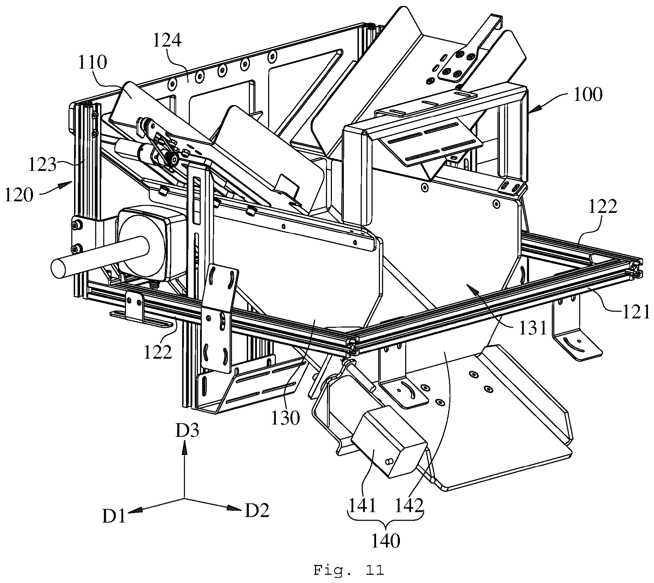

As shown in Fig. 11, the machine rack 120 includes a first cross beam 121, two second cross beams 122, two third longitudinal beams 123 and a back plate 124. The length direction of the first cross beam 121 is parallel to the left-right direction D1 (the direction indicated by the arrow is left and the reverse direction is right), the length direction of the second cross beam 122 is parallel to the front-back direction D2 (the direction indicated by the arrow is front and the reverse direction is rear), and the length direction of the third longitudinal beam 123 is parallel to the up-down direction D3 (the direction indicated by the arrow is up and the reverse direction is down). Both ends of the first cross beam 121 along the left-right direction D1 are connected with the front ends of the two second cross beams 122 respectively, and the lower ends of the two third longitudinal beams 123 are connected with the rear ends of the two second cross beams 122 respectively. The back plate 124 is connected to the two third longitudinal beams 123 and located at a rear side of the two third longitudinal beams 123. Among these, the left-right direction D1, the front-back direction D2 and the up-down direction D3 are perpendicular to each other.

The machine rack 120 further includes two support beams 125, the length direction of each support beam 125 is parallel to the up-down direction D3, and the two support beams 125 are connected to the two second cross beams 122 respectively.

Among these, the retriever 100 according to the embodiment of the present application includes two retrieval assemblies 110, which are arranged oppositely along the left-right direction D1 and connected with two support beams 125 respectively, and are also connected with the back plate 124.

The retrieval hopper 130 is located in the space surrounded by the first cross beam 121 and the two second cross beams 122, and the retrieval hopper 130 is connected to the two retrieval assemblies 110.

Of course, in other embodiments, the number of the retrieval assemblies 110 can also be one, three or other numbers. The retrieval hopper 130 can be connected with the first cross beam 121 and the second cross beam 122.

As shown in Fig. 11, the retrieval hopper 130 has a fourth outlet 131 for an article to slide out. The retriever 100 further includes an opening and closing assembly 140 for opening or enclosing the fourth outlet 131.

As an example, the opening and closing assembly 140 includes a drive mechanism 141 and a door member 142, wherein the door member 142 is movable between a first position to close the fourth outlet 131 and a second position to open the fourth outlet 131, and the drive mechanism 141 is connected to the retrieval hopper 130 and connected to the door member 142 for driving the door member 142 to move. It can be understood that, by providing the opening and closing assembly 140, it is possible to control when an article in the retrieval hopper 130 slide out of the retrieval hopper 130.

It can be understood that, the drive mechanism 141 can be an electric motor (defined as a second electric motor), an electric push rod or the like, which is not limited in the present application.

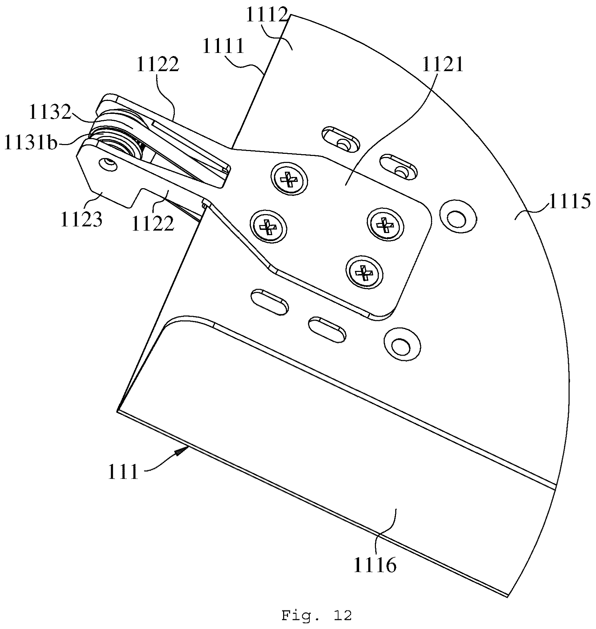

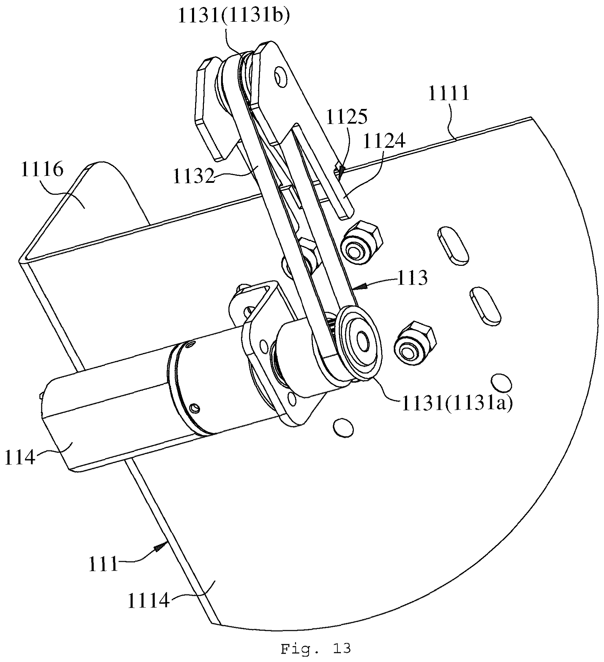

As shown in Figs. 12 and 13, the retrieval assembly 110 according to the embodiment of the present application includes a ramp 111, a guide 112, a rotary unit 113 and a first electric motor 114. The ramp 111 has an edge 1111. The guide 112 is connected to the ramp 111, and the guide 112 at least partially projects from the edge 1111; the rotary unit 113 is rotatably connected to part of the guide 112 projecting from the edge 1111, and configured to generate friction with an article to drive the article to slide into the ramp 111 through the guide 112; the first electric motor 114 is connected to the rotary unit 113 for driving the rotary unit 113 to rotate.

As shown in Fig. 10, when the retrieval assembly 110 according to the embodiment of the present application retrieves an article, the guide 112 and the rotary unit 113 at least partially pass through the recess 212 from bottom to top, and the first electric motor 114 drives the rotary unit 113 to rotate, and the article is driven to slide into the ramp 111 through the guide 112 by a friction force between the rotary unit 113 and the article.

Thus it can be seen that, the retrieval assembly 110 according to the embodiment of the present application can retrieve an article by rotating the rotary unit 113 and using a friction force generated between the rotary unit 113 and the article, so that its retrieval efficiency is significantly improved. Moreover, during the process of sliding into the retrieval assembly 110, it is subjected to not only gravity of the article itself but also a frictional force, which significantly improves the success rate of sliding the article into the retrieval assembly 110.

Among these, the ramp 111 has a target included angle relative to the horizontal plane, that is, the ramp 111 is arranged obliquely. The ramp 111 has a bottom plate 1115 and two side plates 1116, and both sides of the bottom plate 1115 along the front-back direction D2 are connected with the two side plates 1116 respectively. By providing the side plate 1116, it is possible to prevent an article on the ramp 111 from slipping off a side of the ramp 111. The bottom plate 1115 of the ramp 111 has this edge 1111.

Continuing to refer to Figs. 12 and 13, the rotary unit 113 includes two rotary members 1131 and an annular member 1132. For ease of description, the two rotary members 1131 are defined as a first rotary member 1131a and a second rotary member 1131b respectively. The first rotary member 1131a is connected with the output shaft of the first electric motor 114, and the second rotary member 1131b is rotatably connected with a portion of the guide part 112 projecting from the edge 1111. The annular member 1132 is wound around the outer peripheries of the two rotary members 1131, and the outer side surface of the annular member 1132 is used to generate friction with an article. When the first electric motor 114 works, the first rotary member 1131a is driven to rotate, and the first rotary member 1131a drives the annular member 1132 to rotate, which in turn drives the second rotary member 1131b to follow. During the rotation process of the annular member 1132, the outer surface of the annular member 1132 can generate friction with an article, so that the article is dragged from the shelf 200 into the ramp 111 by a friction force.

As an example, the inner side surface of the annular member 1132 has a first tooth structure, and the outer side surface of each rotary member 1131 has a second tooth structure, and the first tooth structure is meshed with the second tooth structure. That is, in the embodiment of the present application, the rotary unit 113 is a synchronous belt structure. Among these, when the rotary unit 113 is a synchronous belt structure, the first rotary member 1131a is a synchronous wheel, the second rotary member 1131b is a driven wheel, and the annular member 1132 is a synchronous belt.

Of course, the rotary unit 113 is not limited to the synchronous belt structure. For example, in other embodiments, the rotary unit 113 includes a friction wheel and an electric motor. The friction wheel is rotatably connected to a portion of the guide part 112 projecting from the edge 1111, and the electric motor is connected with the friction wheel to drive the friction wheel to rotate, so that the friction wheel generates friction with an article to drive the article to slide into the ramp 111 through the guide part 112.

Continuing to refer to Figs. 12 and 13, the bottom plate 1115 of the ramp 111 also has a ramp surface 1112 for guiding an article to slide and a back surface 1114 opposite to the ramp surface 1112. One side of the ramp surface 1112 is an edge 1111, and the guide 112 is attached to the ramp surface 1112. The first rotary member 1131a and the first electric motor 114 are both located on one side where the back surface 1114 is located, and the second rotary member 1131b is at least partially higher than the ramp surface 1112. In one embodiment, the first electric motor 114 is fixedly connected to the bottom plate 1115 of the ramp 111. In other embodiments, the first electric motor 114 can also be fixedly connected to the machine rack 120. The first electric motor 114 is located on one side where the back surface 1114 of the ramp 111 is located, which can not affect the sliding of an article on the ramp 1112.

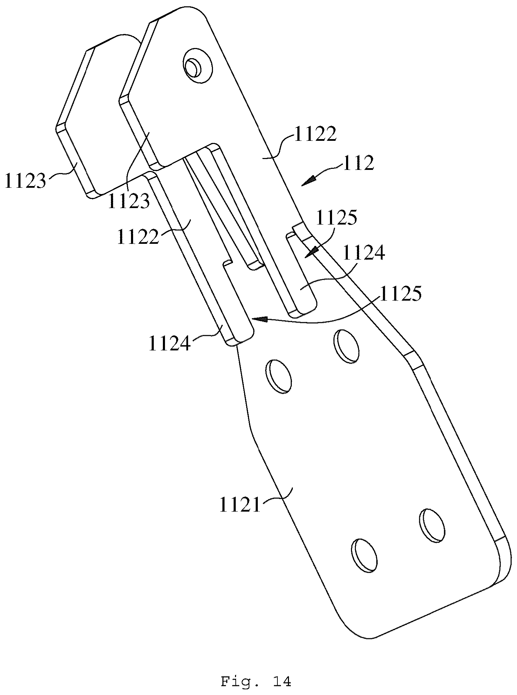

As shown in Figs. 13 and 14, the guide 112 includes a connection portion 1121 and a pair of cantilevers 1122. The connection portion 1121 is connected to the ramp 111 and attached to the ramp surface 1112. A pair of cantilevers 1122 are connected to the connection portion 1121 and at least partially project from the edge 1111; wherein the rotary unit 113 is at least partially rotatably connected between a pair of cantilevers 1122.

In the embodiment of the present application, the second rotary member 1131b is rotatably connected between a pair of cantilevers 1122, and the annular member 1132 is at least partially located between the pair of cantilevers 1122. By rotatably arranging the second rotary member 1131b between the pair of cantilevers 1122, it is possible to improve a stable rotation of the second rotary member 1131b, so as to improve a stable rotation of the annular member 1132 and achieve the effect of stably retrieving an article.

It can be understood that, the connection portion 1121 and the ramp 111 can be divided structures or an integrated structure.

One end of the cantilever 1122 connected with the connection portion 1121 is provided with a reinforcement portion 1124. The reinforcement portion 1124 and the connection portion 1121 are located on both sides of the ramp 111 in the thickness direction, and a clamping groove 1125 for inserting the ramp 111 is formed between the reinforcement portion 1124 and the connection portion 1121. Specifically, the connection portion 1121 is located on one side where the ramp surface 1112 of the bottom plate 1115 of the ramp 111 is located, and the reinforcement portion 1124 is located on one side where the back surface 1114 of the bottom plate 1115 is located. When the guide 112 is assembled with the ramp 111, one side where the edge 1111 of the ramp 111 is located is inserted into the clamping groove 1125 formed by the reinforcement portion 1124 and the connection portion 1121.

When an article slides onto the guide 112, the cantilever 1122 of the guide 112 might bend downward under the gravity of the article since the cantilever 1122 of the guide 112 is suspended. In the embodiment of the present application, by providing the reinforcement portion 1124, the overall structural strength of the guide 112 can be improved. When the cantilever 1122 has a downward bending tendency, the reinforcement portion 1124 can abut against the bottom plate 1115 of the ramp 111 to maintain the stability of the guide 112.

As shown in Figs. 13 and 14, one end of each cantilever 1122 remote from the connection portion 1121 is provided with a stop portion 1123, which protrudes from the cantilever 1122 along the thickness direction of the connection portion 1121, and protrudes along the leftward and downward direction for stopping an article.

As shown in Fig. 10, when the guide 112 jacks up an article located at the lowermost through the recess 212 from bottom to top, the article slides off on the ramp 111 under the effect of own gravity of the article and a friction force between the annular member 1132 and the article. At this time, the remaining article will automatically move towards the baffle 230 under the effect of own gravity.

In the embodiment of the present application, when the remaining article automatically slide downwards on the shelf 210, the stopper 1123 can stop the article before the baffle 230. After the retriever 100 moves away from the recess 212, the remaining article will continue to slide downward until they are blocked by the baffle 230. In other words, after the retriever 100 retrieves one piece of article, the sliding of the remaining article to the baffle 230 is divided into two stages. In this way, it is possible to shorten a sliding distance of an article in each stage and prevent the article from breaking through the baffle 230 under a large inertia due to a too long sliding distance.

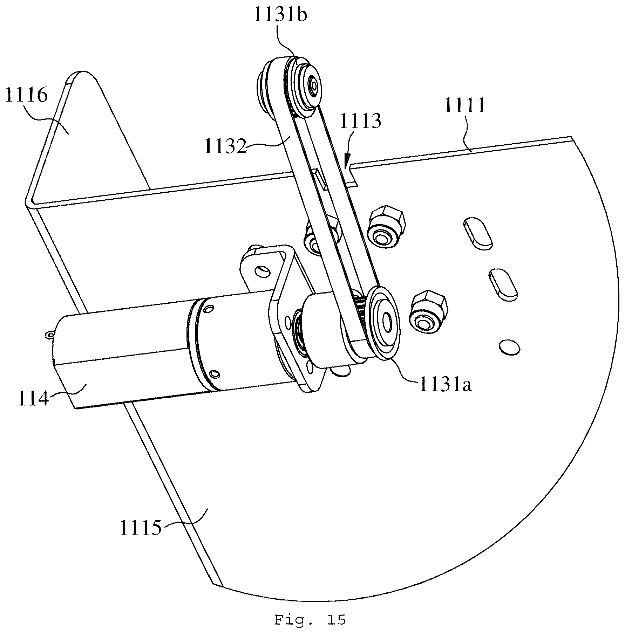

As shown in Fig. 15, the edge 1111 of the ramp 111 has an opening 1113 passing through the ramp surface 1112 and the back surface 1114, and the annular member 1132 is movably arranged to pass through the opening 1113.

In the embodiment of the present application, the annular member 1132 is movably arranged to pass through the opening 1113 of the ramp 111, so that it is possible to reduce a length of the guide 112 projecting from the edge 1111 of the ramp 111, which not only saves the cost, but also prevents the guide 112 from forming a long cantilever structure.

It can be understood that, in other embodiments, the retrieval assembly 110 can also be other structures, for example, the retrieval assembly 110 is a fork which moves to the bottom of the shelf 210 and passes through the recess 212 from bottom to top, so that the fork picks up an article located at the lowermost among a plurality of article and cause the article to climb over the baffle 230 and slide off into the retrieval hopper 130.

To sum up, the workstation and the article retrieval system according to the embodiment of the present application at least have the following advantages and beneficial effects:

The workstation 500 according to the embodiment of the present application includes a buffer assembly 510 and a merge assembly 520. The buffer assembly 510 can be configured to temporarily store an article conveyed by the article retrieval mechanism 300, and the merge assembly 520 can convey an article conveyed by the buffer assembly 510 to the packing assembly 530 or the abnormality processing assembly 540. When the merge assembly 520 transfers an article, the article retrieval mechanism 300 can perform a next retrieval action without waiting in place, which can significantly improve the retrieval efficiency and effectively enhance the ability of processing orders by the workstation 500.

It can be understood that, various embodiments/implementations provided in the present application can be combined with each other without contradiction, which will not be exemplified one by one here.

In the embodiments of this application, the terms "first", "second" and "third" are only used for descriptive purposes, but cannot be understood as indicating or implying relative importance; the term "a plurality of" refers to two or more unless otherwise explicitly defined. The terms such as "installation", "connected", "connection" and "fixing" should be understood broadly. For example, "connection" can be a fixed connection, a detachable connection or an integral connection; "connected" can be directly connected or indirectly connected through an intermediate medium. For those of ordinary skill in the art, the specific meanings of the above-described terms in the embodiments of this application can be understood according to specific conditions.

In the description of the embodiments of this application, it should be understood that, the azimuth or positional relationship indicated by the terms "upper", "lower", "left", "right", "front" and "rear" is based on the azimuth or positional relationship shown in the accompanying drawings, which is only for the convenience of describing the embodiments of this application and simplifying the description, but does not indicate or imply that the referred device or unit must have a specific direction, and be constructed and operated in a specific orientation. Therefore, it cannot be understood as limiting the embodiments of this application.

In the description of this specification, the terms such as "one embodiment", "some embodiments" and "specific embodiments" mean that the specific features, structures, materials or characteristics described in connection with this embodiment or example are included in at least one embodiment or example of the embodiments of this application. In this specification, the schematic expressions of the above-described terms do not necessarily refer to the same embodiment or example. Moreover, the specific features, structures, materials or characteristics described can be combined in any one or more embodiments or examples in a suitable manner.

The above which is only the preferred embodiment of the embodiments of this application, is not used to limit the embodiments of this application. For those skilled in the art, various modifications and changes can be made to the embodiments of this application. Any modification, equivalent substitution, improvement and the like made within the spirit and principles of the embodiments of this application shall be included in the protection scope of the embodiments of this application.

## Claims

1. A workstation, comprising:
a packing assembly (530);
a buffer assembly (510) comprising a buffer rack (511) and a plurality of buffer hoppers (512), wherein the plurality of buffer hoppers (512) are installed on the buffer rack (511) and configured to receive an article conveyed by an article retrieval mechanism; wherein the number of the buffer hoppers (512) is greater than or equal to that of sorting hoppers (321) of the article retrieval mechanism; and
a merge assembly (520) movably connected to the buffer rack (511) through a movable assembly (550) and configured to receive an article in at least one of the plurality of buffer hoppers (512) and convey at least one article to the packing assembly (530).

2. The workstation according to claim 1, wherein the movable assembly (550) comprises a third slide rail (551) and a third slide block (552), wherein the third slide rail (551) is connected to the buffer rack (511) and the third slide block (552) is movably connected to the third slide rail (551); and
the merge assembly (520) is connected to the third slide block (552).

3. The workstation according to claim 2, wherein a length direction of the third slide rail (551) is parallel to a height direction of the buffer rack (511).

4. The workstation according to claim 1, wherein the buffer rack (511) comprises two frames (5111) arranged at intervals along a length direction of the buffer rack (511), and each of the frames (5111) is connected with the plurality of buffer hoppers (512) arranged at intervals along the height direction of the buffer rack (511); the number of the plurality of buffer hoppers (512) connected with the same frame (5111) is greater than or equal to that of the sorting hoppers (321); and
along the height direction of the buffer rack (511), the merge assembly (520) is movably located between the two frames (5111).

5. The workstation according to claim 4, wherein each of the frames (5111) comprises two second longitudinal beams (5111a), and a plurality of guide parts (5112) arranged at intervals along the height direction of the buffer rack (511) are connected between the two second longitudinal beams (5111a), the plurality of guide parts (5112) correspond to the plurality of buffer hoppers (512) within the frame (5111) respectively, and each of the guide parts (5112) has a guide slope (5112a) for guiding the article to slide off from the article retrieval mechanism into the buffer hopper (512).

6. The workstation according to claim 1, wherein the buffer hopper (512) comprises a hopper body (5121) and a first cover assembly (5122), and the hopper body (5121) is connected to the buffer rack (511) and has a second outlet (5121a); the first cover assembly (5122) is connected to the hopper body (5121) for enclosing or opening the second outlet (5121a) .

7. The workstation according to claim 6, wherein the first cover assembly (5122) comprises:
a first cover plate (5122a) rotatably connected to the hopper body (5121) for opening or enclosing the second outlet (5121a);
a first connecting rod (5122a) with one end hinged to a side of the first cover plate (5122a);
a second connecting rod (5122c) with one end hinged to the other end of the first connecting rod (5122b); and
a third electric motor (5122d) connected to the hopper body (5121), wherein an output shaft of the third electric motor (5122d) is connected to the other end of the second connecting rod (5122c).

8. The workstation according to claim 1, wherein the merge assembly (520) comprises:
a merge hopper (521) movably connected to the buffer rack (511) through the movable assembly (550) and having a third outlet (5211); and
a second cover assembly (522) connected to the merge hopper (521) for enclosing or opening the third outlet (5211).

9. The workstation according to claim 8, wherein the second cover assembly (522) comprises:
a second cover plate (5221) rotatably connected to the merge hopper (521) for opening or enclosing the third outlet (5211);
a third connecting rod (5222) with one end hinged to a side of the second cover plate (5221);
a fourth connecting rod (5223) with one end hinged with the other end of the third connecting rod (5222); and
a fourth electric motor (5224) connected to the merge hopper (521), wherein an output shaft of the fourth electric motor (5224) is connected to the other end of the fourth connecting rod (5223).

10. The workstation according to claim 1, wherein the packing assembly (530) comprises:
a packager (531) for packing the article; and
a buffer table (532) configured to buffer the article conveyed by the merge assembly (520) and convey the article to the packager (531).

11. The workstation according to claim 1, further comprising an abnormality processing assembly (540);
wherein the merge assembly (520) is also configured to convey an abnormal article to the abnormality processing assembly (540).

12. An article retrieval system, comprising the workstation according to any one of claims 1 to 11.

13. The article retrieval system according to claim 12, wherein the article retrieval system further comprises an article retrieval mechanism (300) configured to convey an article to a plurality of buffer hoppers (512) of the workstation; the article retrieval mechanism (300) comprises:
a retriever (100); and
a sorting assembly (320) comprising a plurality of sorting hoppers (321), wherein the number of the buffer hoppers (512) is greater than or equal to that of the sorting hoppers (321); wherein the retriever (100) is configured to retrieve the article located on a shelf (200) and convey the article to any one of the plurality of sorting hoppers (321).
